# FASCICULE DE BREVET EUROPEEN

(11) **EP 4 288 307 B1**
(45) Date de publication et mention de la délivrance du brevet: **25.12.2024**
(21) Numéro de dépôt: 22702501.2
(22) Date de dépôt: 05.01.2022
(51) Int. Cl.: B60R 16/04, H01M 50/20, B60R 21/02, B60R 16/023

(54) **VÉHICULE ÉLECTRIQUE ÉQUIPÉ D'UN BOÎTIER ÉLECTRONIQUE**
ELEKTROFAHRZEUG MIT EINER ELEKTRONISCHEN EINHEIT
ELECTRIC VEHICLE EQUIPPED WITH AN ELECTRONIC UNIT

(30) Priorité: 08.02.2021 FR 2101189
(43) Date de publication de la demande: 13.12.2023
(73) Titulaire: Stellantis Auto SAS, 78300 Poissy (FR)
(72) Inventeur: RAHOUTI, Fatima Zahra, Casablanca, 20520 (MA); GOUJ, Saad, Casablanca, 20520 (MA); KHOUKHI, Amal, Casablanca, 20520 (MA)
(74) Mandataire: PSIP
(86) Numéro de dépôt international: PCT/FR2022/050025
(87) Numéro de publication internationale: WO 2022/167737

(56) Documents cités:
- EP-A1- 2 186 686
- FR-A1- 2 813 252
- FR-A1- 3 045 533
- FR-A1- 3 046 497
- FR-A1- 3 053 296
- JP-A- 2016 188 024

## Description

La présente invention revendique la priorité de la demande française N°2101189 déposée le 08.02.2021

La présente invention concerne un véhicule automobile équipé d'un boîtier électronique lié à un support fixé sur un bac de batterie du réseau de bord.

Les véhicules automobiles comportent généralement une batterie du réseau de bord présentant une basse tension de 12V, maintenu dans un bac disposé dans le compartiment avant du groupe motopropulseur. La batterie est pour rester accessible disposée dans un espace libre en partie supérieure de ce compartiment, un peu en avant du tablier de la caisse du véhicule.

On peut en particulier fixer directement sur un côté du bac de la batterie, tourné vers la direction transversale du véhicule, un support recevant un boîtier comprenant une électronique de puissance, qui par exemple alimente cette batterie, afin de bénéficier d'un espace disponible, et de câbles de liaison courts entre ces éléments permettant de limiter les coûts et les pertes électriques.

Par ailleurs chaque pédale de frein ou d'embrayage fixée sur le tablier dans l'habitacle, possède dans le compartiment moteur un système de piston hydraulique disposé dans l'alignement de la pédale, allongé suivant la direction longitudinale du véhicule, formant un bloc rigide qui à partir du tablier avance dans ce compartiment. On peut obtenir un système hydraulique sensiblement aligné sur le boîtier électronique disposé à côté de la batterie.

Lors d'un choc frontal du véhicule suffisamment important, on obtient un écrasement de sa face avant et un recul des organes mécaniques se trouvant dans le compartiment moteur, qui doivent pour satisfaire aux normes de sécurité éviter d'entraîner des pénétrations d'organes dans l'habitacle pouvant blesser les pieds du conducteur.

En particulier avec un recul de la batterie et de son bac entraînant le boîtier électronique fixé rigidement dessus par son support, ce boîtier pourrait alors repousser le système hydraulique d'une pédale aligné longitudinalement, en générant une intrusion dans l'habitacle qui est dangereuse.

Le document FR 3 053 296 A1 divulgue un ensemble de fixation pour un calculateur électronique de véhicule automobile.

La présente invention a notamment pour but d'éviter ces problèmes de l'art antérieur.

Elle propose à cet effet un véhicule automobile équipé d'un boîtier électronique lié à un support fixé sur une face latérale d'un bac de batterie du réseau de bord, tournée vers la direction transversale de ce véhicule, ce véhicule étant remarquable en ce que la face latérale comporte des dispositifs de calage du support dans toutes les directions, permettant une descente de ce support venant du haut, et comprenant dans la direction avant du véhicule une force limitée de retenue du support inférieure à 50daN. Un avantage de ce véhicule est qu'un opérateur peut facilement introduire le support recevant le boîtier électronique en le glissant verticalement par le haut, avec un maintien dans toutes les directions, jusqu'à ce qu'il arrive sur un dispositif de calage vers le bas.

Ensuite en cas de choc frontal avant sur le véhicule avec des éléments du groupe motopropulseur repoussant vers l'arrière la batterie, le boîtier électronique étant dans l'alignement d'un système hydraulique d'une pédale, à partir d'un effort ne dépassant pas 50daN appliqué par le boîtier sur ce système le calage avant du boîtier va céder en évitant de transmettre un effort supérieur sur le système hydraulique.

On obtient de manière simple et efficace une protection contre l'intrusion du système hydraulique et de sa pédale dans l'habitacle, en protégeant les pieds du conducteur.

Le véhicule automobile selon l'invention peuvent comporter de plus une ou plusieurs des caractéristiques suivantes, qui peuvent être combinées entre elles.

Avantageusement, la face latérale du bac comporte un bossage vertical formant un calage vers l'avant du support présentant la force limitée de retenue.

Dans ce cas, avantageusement le support présente un bord avant en appui sur le bossage vertical disposant d'une élasticité dans la direction longitudinale du véhicule.

Avantageusement, la face latérale comporte des crochets disposés dans un plan horizontal recevant le support lors de sa descente.

Dans ce cas, avantageusement les crochets appliquent un calage du support vers l'arrière et transversalement vers l'extérieur par rapport à la batterie. Avantageusement, le véhicule comporte un dispositif de calage vertical du support comprenant des clips élastiques qui réalisent un calage automatique vers le haut du support en fin de descente.

De plus, avantageusement le support comporte des bords inférieurs disposant d'une élasticité dans la direction verticale, venant en appui sur des bossages horizontaux de la face latérale du bac en fin de descente. Avantageusement, le bord avant élastique ou les bords inférieurs élastiques présentent chacun en arrière une découpe formant un perçage allongé parallèle au bord donnant son élasticité.

Avantageusement, le bac de batterie et le support sont réalisés par des moulages de matière plastique, formant en même temps les dispositifs de calage.

En particulier, le boîtier électronique peut constituer un convertisseur de tension continue alimentant la batterie du réseau de bord.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue sur un véhicule automobile selon l'invention, d'un boîtier électronique fixé par un support à un bac de batterie du réseau de bord ;
[Fig. 2] est une vue de côté du support seul ;
[Fig. 3] est une vue de côté du support fixé sur le bac de batterie ;
[Fig. 4] est une vue de détail de la partie inférieure du support fixé sur le bac de batterie ;
[Fig. 5] est une vue de côté du support fixé sur le bac de batterie recevant une goulotte de passage de câbles ; et
[Fig. 6] est une vue de côté du support fixé sur le bac de batterie recevant un capotage de protection de cosses.

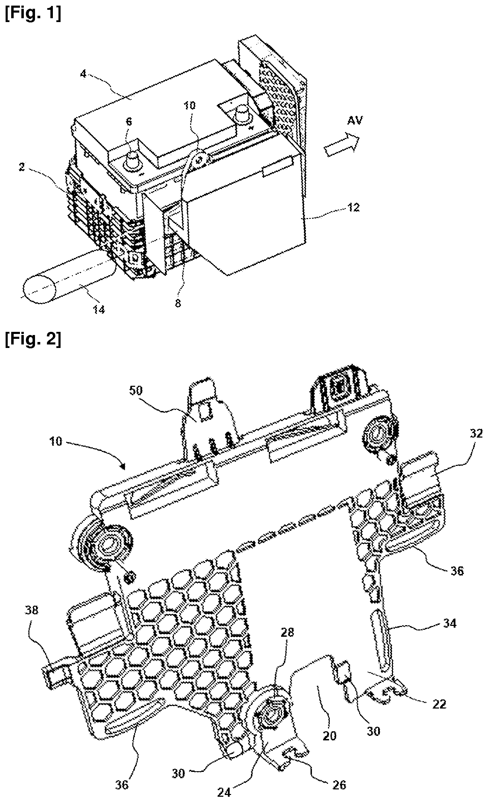

La figure 1 présente un bac de batterie 2 réalisé par un moulage en matière plastique, fixé dans un véhicule présentant un côté avant AV, contenant une batterie du réseau de bord 4 présentant une forme allongée suivant la direction longitudinale de ce véhicule. La batterie 4 est fixée dans la direction transversale sur le côté gauche du véhicule, qui est défini en regardant l'avant de ce véhicule.

Un boîtier électronique 12 formant un convertisseur de tension continue, reçoit une tension de 48V venant d'une batterie alimentant une machine électrique de traction hybride du véhicule, pour la convertir en une tension de 12V permettant de recharger la batterie du réseau de bord 4.

Le boîtier électronique 12 présente une forme parallélépipédique allongée suivant la direction longitudinale du véhicule, de faible épaisseur suivant la direction transversale, qui est fixée par l'intermédiaire d'un support plat 10 sur la face latérale droite verticale 8 du bac de batterie 2.

Un système hydraulique 14 de la pédale de frein ou d'embrayage du véhicule, représenté schématiquement, présente une forme allongée longitudinalement qui est alignée sur la face arrière du boîtier électronique 12.

On obtient avec une fixation fortement rigide du boîtier électronique 12 sur le bac de batterie 2, en cas de choc important sur l'avant du véhicule, un risque de recul de la batterie 4 entraînant par son bac le boîtier électronique qui pourrait venir percuter le système hydraulique 14 en le repoussant vers l'habitacle du véhicule.

La figure 2 présente le support 10 réalisé par un moulage en matière plastique, formant sensiblement une plaque verticale comprenant dans son épaisseur des formes alvéolaires hexagonales permettant de la rigidifier.

Le support 10 comporte en partie inférieure une échancrure centrale 20 entourée par une patte avant 22 et une patte arrière 24, se terminant chacune par un rebord horizontal 26 tourné vers le côté droit, comprenant une fente ouverte vers l'extérieur.

Le support 10 comporte trois perçages 28 renforcés par un contour épais, un en bas, et deux en haut vers l'avant et l'arrière, permettant de fixer le boîtier électronique 12 sur ce support. Chaque patte 22, 24 comporte vers l'arrière une surépaisseur de renfort 30.

Le support 10 comporte à mi-hauteur vers l'avant et vers l'arrière, un clip élastique 32 tourné vers le haut, présentant en partant du bas une face inclinée vers le côté gauche, puis un rebord horizontal tourné vers le côté droit, et enfin une petite partie verticale.

Le support 10 comporte en avant de la patte avant 22 un bord avant vertical élastique 34 comprenant une fine bande de matière séparée de ce support par une découpe formant un perçage allongé verticalement, donnant à ce bord une élasticité dans la direction longitudinale.

Le support 10 comporte sous chaque clip élastique 32 un bord inférieur horizontal élastique 36 comprenant une fine bande de matière séparée de ce support par une découpe formant un perçage allongé horizontalement, donnant à ce bord une élasticité dans la direction verticale.

Le support 10 comporte sur son bord arrière une patte arrière horizontale 38 qui est tournée vers l'arrière. Le support 10 comporte en partie supérieure deux pattes supérieures 50 tournées vers le haut.

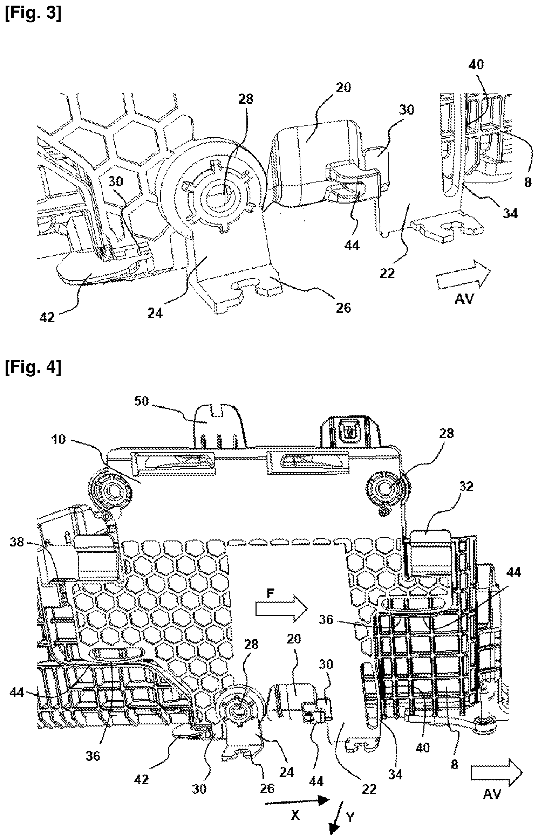

Les figures 3 et 4 présentent le bac de batterie 2 comportant la face latérale droite verticale 8 recevant le support 10 qui est fixé à plat dessus est calé dans toutes les directions, après une descente de ce support par un opérateur en le maintenant plaqué sur cette face droite.

Lors de la descente du support 10 on a chaque surépaisseur de renfort 30 formée à sa base qui s'introduit par le haut dans un crochet 42 disposé dans un plan horizontal et ouvert vers l'avant, de manière à réaliser un calage de la base de ce support vers l'arrière et dans la direction transversale.

On a en parallèle lors de la descente du support 10 sa patte arrière 38 qui s'introduit dans une fente verticale formée à l'arrière de la face latérale du bac 8, de manière à réaliser un calage de la partie arrière de support dans la direction transversale.

On a en cours de descente du support 10 le bord avant vertical élastique 34 qui vient en appui sur un bossage vertical 40 formé sur la face latérale du bac 8, avec une compression de ce bord avant par déformation élastique afin d'assurer avec les crochets 42 formant des butés arrière, un calage sans jeu dans la direction longitudinale de ce support.

On a en fin de descente du support 10 les deux bords inférieurs horizontaux élastiques 36 qui viennent en appui chacun sur un bossage horizontal 44 formé sur la face latérale du bac 8, en se comprimant. On a en parallèle en fin de descente chaque clip élastique 32 qui se déforme vers le côté droit en arrivant sur une barrette horizontale de la face latérale du bac 8, puis se détend en ajustant son rebord horizontal sous cette barrette.

On obtient ainsi lors du clipsage des clips élastiques 32 une compression des deux bords inférieurs élastiques 36 afin d'assurer un calage sans jeu du support 10 dans la direction verticale.

Les différents dispositifs de calage comportent des guidages définis de manière à permettre une descente en aveugle du support 10 qui longe la face latérale du bac 8, dans un espace peu visible, en assurant en fin de course que tous les calages sont bien engagés.

Le bossage vertical 40 de maintien du bord avant élastique 34 du support 10, est calculé de manière à permettre un escamotage de ce bossage pour un effort longitudinal sur le support vers l'avant, indiqué par la flèche F en figure 3, dépassant 50daN. En particulier on calcule l'épaisseur du bossage vertical 40 en fonction de la résistance de son matériau, de manière à obtenir cette valeur limite de résistance.

De cette manière en cas de choc avant sur le véhicule entraînant un recul du bac de batterie 2, la face arrière du boîtier électronique 12 venant buter sur le système hydraulique 14, le boîtier sort des crochets 42, 44 vers l'avant dans la direction X, puis peut dégager latéralement dans la direction Y.

Le boîtier électronique 12 ne peut transmettre sur le système hydraulique 14 un effort supérieur à cette valeur de 50daN. On protège ainsi le système hydraulique 14 fixé sur le tablier du véhicule et les pédales disposées à l'intérieur, en évitant une déformation trop forte causant des intrusions dans l'habitacle.

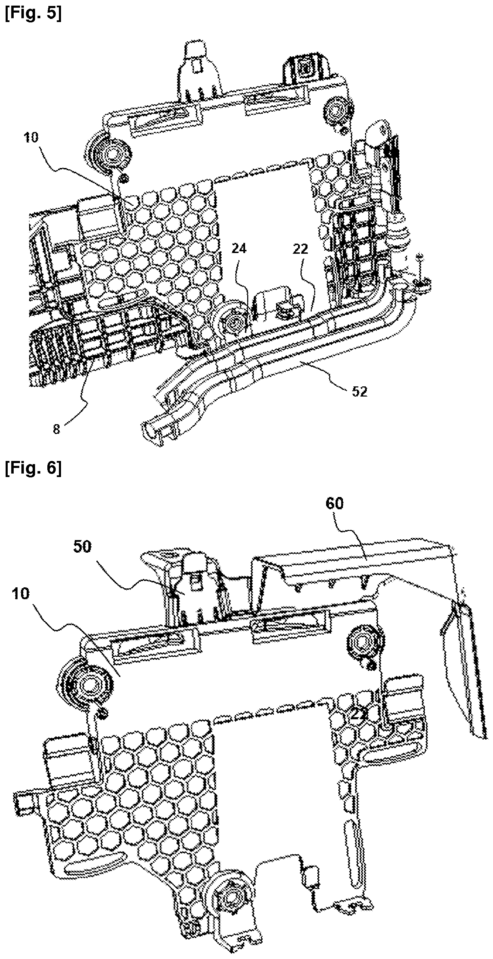

La figure 5 présente une goulotte 52 réalisée par un moulage d'une matière plastique, formant des canaux de guidage des câbles recevant la moyenne tension d'alimentation du boîtier électronique 12, qui est fixée par clipsage dans les fentes tournées vers le côté extérieur des rebords horizontaux 26 disposés à la base des pattes inférieures avant 22 et arrière 24 du support 10.

La figure 6 présente un capot de protection des cosses électriques 60 du boîtier électronique 12, formé par un moulage d'une matière plastique, qui descend sur ce boîtier en venant se clipser sur les deux pattes supérieures 50 du support 10.

On obtient de manière économique, avec un support 10 et un bac de batterie 2 réalisés par moulage de matière plastique de manière à intégrer un grand nom de fonctions lors de ces moulages, une fixation du boîtier électronique 12 avec une simplicité et une rapidité de mise en oeuvre, sans outillage, comprenant dans toutes les directions un positionnement précis et une rigidité suffisante, avec la limitation d'effort maximum qui pourrait être transmis sur un système hydraulique disposé dans l'axe longitudinal de ce boîtier.

## Revendications

1. Véhicule automobile équipé d'un boîtier électronique (12) lié à un support (10) fixé sur une face latérale (8) d'un bac (2) de batterie du réseau de bord (4), tournée vers la direction transversale de ce véhicule, **caractérisé en ce que** la face latérale (8) comporte des dispositifs de calage du support (10) dans toutes les directions, permettant une descente de ce support (10) venant du haut, et comprenant dans la direction avant du véhicule une force limitée de retenue du support (10) inférieure à 50daN.

2. Véhicule automobile selon la revendication 1, **caractérisé en ce que** la face latérale du bac (8) comporte un bossage vertical (40) formant un calage vers l'avant du support (10) présentant la force limitée de retenue.

3. Véhicule automobile selon la revendication 2, **caractérisé en ce que** le support (10) présente un bord avant (34) en appui sur le bossage vertical (40) disposant d'une élasticité dans la direction longitudinale du véhicule.

4. Véhicule automobile selon l'une quelconque des revendications précédentes, **caractérisé en ce que** la face latérale (8) comporte des crochets (42) disposés dans un plan horizontal recevant le support (10) lors de sa descente.

5. Véhicule automobile selon la revendication 4, **caractérisé en ce que** les crochets (42) appliquent un calage du support (10) vers l'arrière et transversalement vers l'extérieur par rapport à la batterie (4).

6. Véhicule automobile selon l'une quelconque des revendications précédentes, **caractérisé en ce qu'**il comporte un dispositif de calage vertical du support (10) comprenant des clips élastiques (32) qui réalisent un calage automatique vers le haut du support en fin de descente.

7. Véhicule automobile selon la revendication 6, **caractérisé en ce que** le support (10) comporte des bords inférieurs (36) disposant d'une élasticité dans la direction verticale, venant en appui sur des bossages horizontaux (44) de la face latérale du bac (8) en fin de descente.

8. Véhicule automobile selon la revendication 3 ou 7, **caractérisé en ce que** le bord avant élastique (34) ou les bords inférieurs élastiques (36) présentent chacun en arrière une découpe formant un perçage allongé parallèle au bord donnant son élasticité.

9. Véhicule automobile selon l'une quelconque des revendications précédentes, **caractérisé en ce que** le bac de batterie (2) et le support (10) sont réalisés par des moulages de matière plastique, formant en même temps les dispositifs de calage.

10. Véhicule automobile selon l'une quelconque des revendications précédentes, **caractérisé en ce que** le boîtier électronique (12) constitue un convertisseur de tension continue alimentant la batterie du réseau de bord (4).

## Patentansprüche

1. Kraftfahrzeug, ausgestattet mit einer Elektronikbox (12), die mit einem Träger (10) verbunden ist, der an einer Seitenfläche (8) eines Batteriekastens (2) des Bordnetzes (4) befestigt ist und in dessen Querrichtung zeigt Fahrzeug, **dadurch gekennzeichnet, dass** die Seitenfläche (8) Vorrichtungen zum Verkeilen der Stütze (10) in allen Richtungen aufweist, die ein Absenken dieser Stütze (10) von oben her ermöglichen und in der Vorderrichtung des Fahrzeugs eine begrenzte Halterung umfassen Kraft der Stütze (10) weniger als 50 daN.

2. Kraftfahrzeug nach Anspruch 1, **dadurch gekennzeichnet, dass** die Seitenfläche der Ablage (8) einen vertikalen Vorsprung (40) aufweist, der eine nach vorne gerichtete Verkeilung des Trägers (10) bildet, die eine begrenzte Haltekraft bietet.

3. Kraftfahrzeug nach Anspruch 2, **dadurch gekennzeichnet, dass** der Träger (10) eine auf dem vertikalen Vorsprung (40) aufliegende Vorderkante (34) aufweist, die in Fahrzeuglängsrichtung eine Elastizität aufweist.

4. Kraftfahrzeug nach einem der vorhergehenden Ansprüche, **dadurch gekennzeichnet, dass** die Seitenfläche (8) in einer horizontalen Ebene angeordnete Haken (42) aufweist, die den Träger (10) beim Absenken aufnehmen.

5. Kraftfahrzeug nach Anspruch 4, **dadurch gekennzeichnet, dass** die Haken (42) eine Verkeilung des Trägers (10) nach hinten und quer nach außen gegenüber der Batterie (4) bewirken.

6. Kraftfahrzeug nach einem der vorhergehenden Ansprüche, **dadurch gekennzeichnet, dass** es eine Vorrichtung zum vertikalen Verkeilen des Trägers (10) umfasst, die elastische Klammern (32) umfasst, die am Ende des Abstiegs ein automatisches Verkeilen des Trägers nach oben bewirken.

7. Kraftfahrzeug nach Anspruch 6, **dadurch gekennzeichnet, dass** der Träger (10) in vertikaler Richtung elastische Unterkanten (36) aufweist, die endseitig auf horizontalen Vorsprüngen (44) der Seitenfläche der Wanne (8) aufliegen des Abstiegs.

8. Kraftfahrzeug nach Anspruch 3 oder 7, **dadurch gekennzeichnet, dass** die elastische Vorderkante (34) bzw. die elastischen Unterkanten (36) an der Rückseite jeweils einen Ausschnitt aufweisen, der eine längliche Bohrung parallel zur Kante bildet, die der Kante ihre Elastizität verleiht.

9. Kraftfahrzeug nach einem der vorhergehenden Ansprüche, **dadurch gekennzeichnet, dass** der Batterieträger (2) und der Träger (10) durch Formteile aus Kunststoffmaterial hergestellt sind und gleichzeitig die Keilvorrichtungen bilden.

10. Kraftfahrzeug nach einem der vorhergehenden Ansprüche, **dadurch gekennzeichnet, dass** die Elektronikeinheit (12) einen die Batterie des Bordnetzes (4) versorgenden Gleichspannungswandler darstellt.

## Claims

1. Motor vehicle equipped with an electronic box (12) connected to a support (10) fixed on a lateral face (8) of a battery tray (2) of the on-board network (4), facing the transverse direction of this vehicle, **characterized in that** the lateral face (8) comprises devices for wedging the support (10) in all directions, allowing a descent of this support (10) coming from above, and comprising in the front direction of the vehicle a limited force for retaining the support (10) less than 50 daN.

2. Motor vehicle according to claim 1, **characterized in that** the lateral face of the tray (8) comprises a vertical boss (40) forming a wedging towards the front of the support (10) having the limited retaining force.

3. Motor vehicle according to claim 2, **characterized in that** the support (10) has a front edge (34) resting on the vertical boss (40) having elasticity in the longitudinal direction of the vehicle.

4. Motor vehicle according to any one of the preceding claims, **characterized in that** the lateral face (8) comprises hooks (42) arranged in a horizontal plane receiving the support (10) during its descent.

5. Motor vehicle according to claim 4, **characterized in that** the hooks (42) apply a wedging of the support (10) towards the rear and transversely towards the outside relative to the battery (4).

6. Motor vehicle according to any one of the preceding claims, **characterized in that** it comprises a device for vertical wedging of the support (10) comprising elastic clips (32) which achieve an automatic wedging towards the top of the support at the end of descent.

7. Motor vehicle according to claim 6, **characterized in that** the support (10) comprises lower edges (36) having elasticity in the vertical direction, coming to bear on horizontal bosses (44) of the lateral face of the tray (8) at the end of descent.

8. Motor vehicle according to claim 3 or 7, **characterized in that** the elastic front edge (34) or the elastic lower edges (36) each have a cutout at the rear forming an elongated hole parallel to the edge giving it elasticity.

9. Motor vehicle according to any one of the preceding claims, **characterized in that** the battery tray (2) and the support (10) are made by plastic moldings, forming at the same time the wedging devices.

10. Motor vehicle according to any one of the preceding claims, **characterized in that** the electronic box (12) constitutes a direct voltage converter supplying the battery of the on-board network (4).
